# EUROPÄISCHE PATENTSCHRIFT

(11) **EP 0 908 085 B1**
(45) Veröffentlichungstag und Bekanntmachung des Hinweises auf die Patenterteilung: **12.06.2002**
(21) Anmeldenummer: 98119181.0
(22) Anmeldetag: 11.10.1998
(51) Int. Cl.: A01C 23/00, A01M 7/00

(54) **Halterung für ein Fahrzeug zum Verteilen von Gülle**
Suspension system for a sludge spreader
Dispositif d'attache pour un véhicule épandeur de purin

(30) Priorität: 12.10.1997 DE 29717985 U
(43) Veröffentlichungstag der Anmeldung: 14.04.1999
(73) Patentinhaber: Landmaschinen Wienhoff GmbH, 49844 Bawinkel (DE)
(72) Erfinder: Wienhoff, Helmut, 49844Bawinkel (DE); Hinken, Franz, 49808 Lingen (DE)
(74) Vertreter: Wurm, Maria Bernadette, Dr.

(56) Entgegenhaltungen:
- DE-A- 19 640 037
- DE-U- 29 607 633

## Beschreibung

Die Neuerung betrifft eine Halterung für ein Fahrzeug zum Verteilen von Gülle.

Güllefahrzeuge müssen einerseits die Voraussetzungen für eine Zulassung im Straßenverkehr erfüllen, insbesondere, was die äußeren Abmessungen betrifft. Andererseits sollen sie auf dem Feld eine möglichst große Streubreite zum Verteilen von Gülle aufweisen.

Zu diesem Zweck sind Güllefahrzeuge üblicherweise mit einer Halterung ausgestattet, die aus zwei Verteilerarmen besteht. Die Verteilerarme stehen in der Transportstellung parallel zum Güllefahrzeug und werden dann auf dem Feld um eine vertikale Achse in eine Arbeitsstellung senkrecht zum Güllefahrzeug und zur Fahrtrichtung gedreht. Weiter weist die Halterung eine Haltevorrichtung zum Fixieren für Schläuche auf, die von dem Gülleaustrag des Fahrzeugs bis zum Erdboden reichen. Die Schläuche werden durch diese Vorrichtung in vorgegebenem Abstand festgelegt, um eine gleichmäßige Verteilung der Gülle zu gewährleisten. Die Haltevorrichtung für Schläuche kann um eine horizontale Achse ebenfalls in eine Transport- und in eine Arbeitsstellung geklappt werden. Während des Transports ist die Haltevorrichtung für Schläuche aufwärts geklappt, so daß die Schlauchöffnungen nach oben weisen. In der Arbeitsstellung sind sie dagegen abwärts gerichtet, so daß die Schlauchöffnungen in der Arbeitsstellung in etwa bis auf den Erdboden ragen. In der Regel ist ein Verteiler für Gülle an der Halterung angeordnet. Dabei handelt es sich entweder um ein Leitungssystem aus Rohren und/oder Schläuchen oder um einen Verteiler, der im Betriebszustand über eine zentrale Schlauch- oder Rohrleitung mit dem Vorratsbehälter für Gülle verbunden ist, und an den die Schläuche zum Verteilen der Gülle angeschlossen sind.

Bei bekannten Halterungen für Fahrzeuge zum Verteilen von Gülle sind die Halterung und die Haltevorrichtung so ausgebildet, daß die Schläuche zum Verteilen von Gülle in der Transportstellung stets geknickt werden. Das Knicken der Schläuche führt jedoch schnell zu Brüchen, insbesondere deshalb, weil der Biegeradius an der Knickstelle außerordentlich eng ist und weil Gülle häufig bei sehr niedrigen Temperaturen ausgefahren wird. Bei niedrigen Temperaturen sind die Schläuche sehr spröde und brechen schnell.

Ein Lösungsvorschlag, der das Brechen der Schläuche vermeiden soll, ist in der deutschen Gebrauchsmusterschrift DE 296 11 254 beschrieben. Dort wird empfohlen, in die an sich durchgehenden Schläuche aus Kunststoff Flachschlauchabschnitte einzusetzen, vorzugsweise solche aus Textilmaterial. Nachteilig hierbei ist, daß entsprechende Übergangsstücke und Anschlüsse oder Schlauchkupplungen benötigt werden. Außerdem sind Flachschlauchabschnitte zwar unempfindlicher gegen häufiges Knicken, trotzdem kommt es aber auch hier zu Brüchen.

Es ist daher Aufgabe der Neuerung, eine Halterung vorzuschlagen, die Schäden an den Schläuchen zum Austragen von Gülle vermeidet, die durch den Wechsel von der Transport- in die Arbeitsstellung entstehen.

Die vorstehende Aufgabe wird durch eine Halterung für ein Fahrzeug zum Verteilen von Gülle gelöst, das mindestens einen Verteilerarm aufweist, der an einem Fahrzeug zum Verteilen von Gülle anbringbar ist. Der Verteilerarm ist durch Drehen um eine senkrechte Achse aus einer Transportstellung in eine Arbeitsstellung bringbar. An dem Verteilerarm ist eine um eine horizontale Achse klappbare Haltevorrichtung für Schläuche zum Verteilen von Gülle angeordnet, die in der Transportstellung nach oben geklappt ist und die in der Arbeitsstellung nach unten geklappt ist. Die Halterung umfaßt weiter einen Verteiler für Gülle, an den die Schläuche zum Verteilen von Gülle angeschlossen sind, und der an dem Verteilerarm angebracht ist. Diese Halterung ist dadurch gekennzeichnet, daß der Verteiler für Gülle unterhalb der horizontalen Achse angeordnet ist, um die herum die Haltevorrichtung für die Schläuche zum Verteilen von Gülle klappbar ist.

Eine Halterung nach Anspruch 1 ist also so konstruiert, daß die Schläuche zum Verteilen von Gülle vollständig auf einer Seite der horizontalen Achse angeordnet sind, um die die Haltevorrichtung geklappt wird. Ein Knicken der Schläuche ist dadurch ausgeschlossen, ohne daß die Funktion der Halterung oder der Haltevorrichtung nachteilig verändert wird. Vorteilhaft ist nicht nur, daß das Knicken der Schläuche vermieden wird sondern auch, daß das Fahrzeug zum Verteilen von Gülle, das mit der erfindungsgemäßen Halterung ausgestattet ist, in der Transporstellung schmaler ist als solche Fahrzeuge, die eine Halterung mit geknickten Schläuchen aufweisen.

Im Zusammenhang mit dieser Erfindung wird der Begriff "Schläuche" verwendet, weil dies die in der Fachsprache übliche Bezeichnung ist. Unter "Schläuchen" wird jedoch jede geeignete Art von Leitung, so zum Beispiel auch Rohrleitungen aus Kunststoff und/oder Metall verstanden, die zum Fördern und/oder Verteilen von Gülle geeignet ist.

Außer der Beseitigung einer Fehlerquelle bietet diese Anordnung den weiteren Vorteil, daß die Schläuche insgesamt kürzer sind. Die Vorrichtung wird dadurch preiswerter und in den kürzeren Austragsschläuchen kommen zudem weniger Verstopfungen vor bzw. sie können schneller behoben werden.

Die Schläuche zum Verteilen von Gülle können mit sogenannten Gleitschuhen und/oder mit sogenannten Injektoren zum Einbringen der Gülle in den Erdboden verbunden sein.

Weitere vorteilhafte Ausgestaltungen der Neuerung ergeben sich aus den Unteransprüchen.

Der Verteiler für Gülle kann gemäß einer ersten Ausführungsform als Leitungssystem ausgebildet sein, wobei die Leitungen als Kunststoff- oder Metallrohre bzw. -leitungen, aber auch als Schläuche ausgebildet sein können, die sich direkt vom Vorratsbehälter bzw. vom Austrag des Vorratsbehälters ausgehend bis zum Erdboden erstrecken. Die Leitungen sind bei dieser Ausführungsform jeweils einzeln an der Haltervorrichtung für Schläuche in der Weise befestigt, daß sie beim Wechsel von der Arbeits- in die Transportstellung nicht geknickt werden. Die bei dieser Ausführungsform auftretende Torsion der Leitungen bzw. Schläuche verursacht deutlich weniger Bruchstellen an den Schläuchen als die konventionelle Anordnung der Schläuche.

Der Verteiler kann aber nach einer besonders bevorzugten Ausführungsform auch aus einem zylindrischen Hohlkörper bestehen, der mit Anschlüssen für die Schläuche zum Verteilen von Gülle versehen ist. Im Betriebszustand verbindet ein zentraler Zuführschlauch den Austrag des Vorratsbehälters mit dem Verteiler.

Die Halterung für ein Fahrzeug zum Verteilen von Gülle kann zusätzlich mit einer Schwenkvorrichtung versehen sein, durch die der mindestens eine Verteilerarm mittels Schwenken um eine horizontale Achse aus einer unteren Arbeitsstellung in eine obere Transportstellung bewegbar ist.

Der Verteiler für Gülle, der an der Haltevorrichtung angebracht ist, stellt keine besonders große Masse dar, die beim Klappen aus der Arbeitsstellung in die Transportstellung hinderlich wäre. Trotzdem kann, falls gewünscht, an dem Verteiler ein Kontergewicht angebracht werden, das sich über die horizontale Achse hinaus erstreckt, um die herum die Haltevorrichtung geklappt wird.

Schließlich wird es bevorzugt, wenn die Haltevorrichtung an dem Verteilerarm lösbar angebracht ist. Dadurch ist es möglich, einen eventuellen Austausch schadhafter Teile einfach vorzunehmen oder vorhandene Halterungen für Fahrzeuge zum Verteilen von Gülle mit der verbesserten, neuerungsgemäßen Vorrichtung nachzurüsten.

Anhand des nachstehenden Ausführungsbeispiels wird eine mögliche Ausgestaltung der Neuerung beschrieben. Es zeigt:

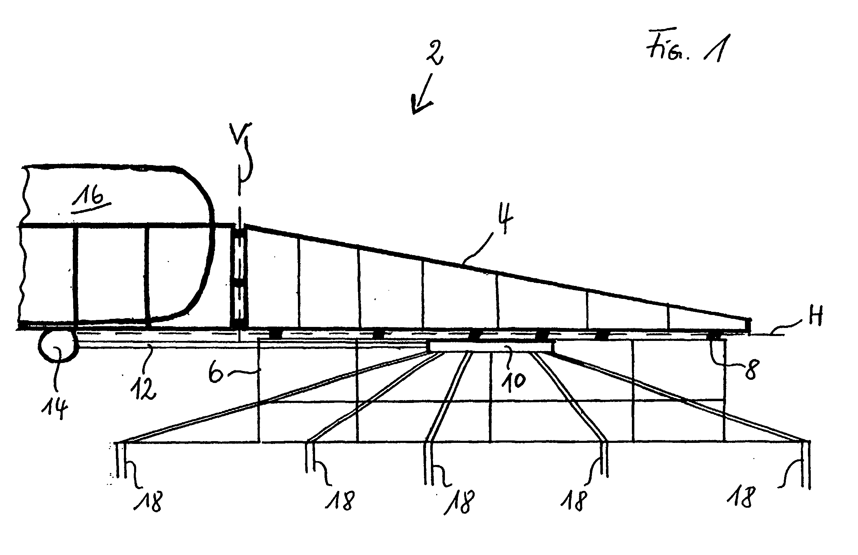

Fig. 1 eine schematische Ansicht einer neuerungsgemäßen Halterung in der Arbeitsstellung

Fig. 1 zeigt eine Halterung 2 für ein Fahrzeug zum Verteilen von Gülle, das hier nicht näher dargestellt ist. Diese Halterung 2 weist zwei Verteilerarme auf, von denen hier nur ein Verteilerarm 4 dargestellt ist. Der Verteilerarm 4 wird um eine vertikale Achse V aus der Transport- in die Arbeitsstellung gedreht. An der Unterseite des Verteilerarms 4 ist eine Haltevorrichtung 6 angebracht.

Die Haltevorrichtung 6 ist um eine horizontale Achse H aus der Transport- in die Arbeitsstellung klappbar; hier ist die Haltevorrichtung 6 in der Arbeitsstellung gezeigt. Sie ist mit Scharnieren 8 lösbar an dem Verteilerarm 4 befestigt. Die Haltevorrichtung dient zum Fixieren der Schläuche 18 zum Verteilen der Gülle.

An dem Verteilerarm 4 bzw. an der Haltevorrichtung 6 ist ein Verteiler 10 für Gülle angeordnet. Der Verteiler 10 für Gülle besteht aus einem zylindrischen Hohlkörper, der in der Arbeitsstellung über eine Schlauchleitung 12 mit dem Austrag 14 des Gülle-Vorratsbehälters 16 verbunden ist. Der Verteiler ist aus Edelstahl hergestellt. An den Verteiler 10 schließen sich mehrere Schäuche 18 zum Verteilen von Gülle an, die sich vom Verteiler 10 bis annähernd zum Erdboden erstrecken. Die Schläuche 18 bestehen aus Kunststoff und sind an der Haltevorrichtung 6 fixiert.

Der Verteiler 10 für Gülle ist in der Arbeitsstellung unterhalb der Achse H an dem Verteilerarm 4 bzw. an der Haltevorrichtung 6 angebracht. Beim Wechseln von der Transport- in die Arbeitsstellung und umgekehrt wird die Haltevorrichtung 6 um die horizontale Achse H geklappt. Bei einer Halterung 2 gemäß Fig. 1 werden bei diesem Vorgang die Schläuche 18 nicht mehr geknickt.

## Patentansprüche

1. Halterung (2) für ein Fahrzeug zum Verteilen von Gülle mit
• mindestens einem Verteilerarm (4), der an einem Fahrzeug zum Verteilen von Gülle anbringbar ist, und der durch Drehen um eine senkrechte Achse (V) aus einer Transportstellung in eine Arbeitsstellung bewegbar ist, mit
• einer an dem Verteilerarm (4) angeordneten, um eine horizontale Achse (H) klappbaren Haltevorrichtung (6) für Schläuche (18) zum Verteilen von Gülle, die in der Transportstellung nach oben geklappt ist und die in der Arbeitsstellung nach unten geklappt ist, und mit
• einem Verteiler (10) für Gülle, der Schläuche (18) zum Verteilen von Gülle umfaßt und der an dem Verteilerarm (4) angebracht ist,
**dadurch gekennzeichnet, daß** der Verteiler (10) für Gülle unterhalb der horizontalen Achse (H) angeordnet ist, um die herum die Haltevorrichtung (6) für die Schläuche (18) zum Verteilen von Gülle klappbar sind.

2. Halterung nach Anspruch 1, **dadurch gekennzeichnet, daß** der Verteiler (10) für Gülle aus einem Leitungssystem besteht, das, gegebenenfalls über eine Austragsvorrichtung (14) , mit dem Gülle-Vorratsbehälter (16) verbunden ist und das die Schläuche (18) zum Verteilen von Gülle umfaßt.

3. Halterung nach Anspruch 1, **dadurch gekennzeichnet, daß** der Verteiler (10) für Gülle aus einem zylindrischen Hohlkörper (10) besteht, der durch ein Rohr oder einen Schlauch (12) mit dem Gülle-Vorratsbehälter (16) verbunden ist und an den die Schläuche (18) zum Verteilen von Gülle angeschlossen sind.

4. Halterung nach mindestens einem der vorangehenden Ansprüche, **dadurch gekennzeichnet, daß** die Halterung (2) um eine horizontale Achse aus einer oberen Transportstellung in eine untere Arbeitsstellung schwenkbar ist.

5. Halterung nach mindestens einem der vorangehenden Ansprüche, **dadurch gekennzeichnet, daß** an dem Verteiler (10) für Gülle ein Kontergewicht angebracht ist, das sich bis oberhalb der hoizontalen Achse (H) erstreckt, um die herum die Haltevorrichtung (6) für die Schläuche (18) zum Verteilen von Gülle klappbar sind.

6. Halterung nach mindestens einem der vorangehenden Ansprüche, **dadurch gekennzeichnet, daß** die Haltevorrichtung (6) für das Verteilen von Gülle lösbar mit dem Verteilerarm (4) verbunden ist.

7. Halterung nach mindestens einem der vorangehenden Ansprüche, **dadurch gekennzeichnet, daß** die Schläuche (18) zum Verteilen von Gülle mit Gleitschuhen oder Injektoren verbunden sind.

## Claims

1. Mounting (2) for a vehicle for distributing liquid manure having
• at least one distributor arm (4), which can be fitted to a vehicle for distributing liquid manure and which can be moved from a transport position into an operating position by being pivoted about a vertical axis (V), having
• a holding device (6), which is arranged on the distributor arm (4) and can be folded about a horizontal axis (H) and is intended for hoses (18) for distributing liquid manure, which is folded upward in the transport position and which is folded downward in the operating position, and having
• a distributor (10) for liquid manure, which comprises hoses (18) for distributing liquid manure and which is fitted to the distributor arm (4),
**characterized in that** the distributor (10) for liquid manure is arranged underneath the horizontal axis (H) around which the holding device (6) for the hoses (18) for distributing liquid manure can be folded.

2. Mounting according to Claim 1, **characterized in that** the distributor (10) for liquid manure comprises a line system, which is connected to the liquid manure storage container (16), if appropriate via a discharge device (14), and which comprises the hoses (18) for distributing liquid manure.

3. Mounting according to Claim 1, **characterized in that** the distributor (10) for liquid manure comprises a cylindrical hollow body (10), which is connected to the liquid manure storage container (16) by a pipe or a hose (12) and to which the hoses (18) for distributing liquid manure are connected.

4. Mounting according to at least one of the preceding claims, **characterized in that** the mounting (2) can be pivoted about a horizontal axis from an upper transport position into a lower operating position.

5. Mounting according to at least one of the preceding claims, **characterized in that** a counterweight is fitted to the distributor (10) for liquid manure, extending until above the horizontal axis (H) around which the holding device (6) for the hoses (18) for distributing liquid manure can be folded.

6. Mounting according to at least one of the preceding claims, **characterized in that** the holding device (6) for distributing liquid manure is detachably connected to the distributor arm (4).

7. Mounting according to at least one of the preceding claims, **characterized in that** the hoses (18) for distributing liquid manure are connected to sliding shoes or injectors.

## Revendications

1. Support (2) pour un véhicule pour distribuer du purin avec
- au moins un bras distributeur (4) qui peut être monté sur un véhicule pour distribuer du purin et qui est mobile par rotation autour d'un axe vertical (V) d'une position de transport à une position de travail, avec
- un dispositif de support (6) placé sur le bras distributeur (4), rabattable autour d'un axe horizontal (H), pour des tuyaux (18) pour distribuer du purin, dispositif qui est rabattu vers le haut en position de transport et qui est rabattu vers le bas en position de travail et avec
- un distributeur (10) pour du purin, qui comprend des tuyaux (18) pour distribuer du purin et qui est fixé sur le bras distributeur (4),
**caractérisé en ce que** le distributeur (10) pour le purin est placé au-dessous de l'axe horizontal (H) autour duquel le dispositif de support (6) pour les tuyaux (18) pour distribuer du purin est rabattable.

2. Support selon la revendication 1, **caractérisé en ce que** le distributeur (10) pour le purin est constitué par un système de tuyauteries qui est relié au réservoir de stockage du purin (16), éventuellement par un dispositif d'épandage (14), et qui comprend les tuyaux (18) pour distribuer du purin.

3. Support selon la revendication 1, **caractérisé en ce que** le distributeur (10) pour le purin est constitué par un corps creux cylindrique (10) qui est relié au réservoir de stockage de purin (16) par un tube ou un tuyau (12) et auquel les tuyaux (18) pour distribuer du purin sont raccordés.

4. Support selon au moins l'une des revendications précédentes, **caractérisé en ce que** le support (2) est pivotant autour d'un axe horizontal d'une position de transport supérieure à une position de travail inférieure.

5. Support selon au moins l'une des revendications précédentes. **caractérisé en ce qu'**un contre-poids est fixé sur le distributeur (10) pour le purin, contre-poids qui s'étend jusqu'au-dessus de l'axe horizontal (H) autour duquel le dispositif de support (6) pour les tuyaux (18) pour distribuer du purin est rabattable.

6. Support selon au moins l'une des revendications précédentes, **caractérisé en ce que** le dispositif de support (6) pour la distribution de purin est relié de manière amovible au bras distributeur (4).

7. Support selon au moins l'une des revendications précédentes, **caractérisé en ce que** les tuyaux (18) pour distribuer le purin sont reliés à des patins de guidage ou à des injecteurs.
